# FASCICULE DE BREVET EUROPEEN

(11) **EP 0 683 874 B1**
(45) Date de publication et mention de la délivrance du brevet: **21.05.1997**
(21) Numéro de dépôt: 94907588.1
(22) Date de dépôt: 17.02.1994
(51) Int. Cl.: F16H 3/72

(54) **TRANSMISSION AVEC DISPOSITIF DE DEMARRAGE PROGRESSIF, EN PARTICULIER POUR VEHICULE**
GETRIEBE MIT PROGRESSIVEN ANLAUF, INSBESONDERE FÜR EIN FAHRZEUG
TRANSMISSION WITH PROGRESSIVE STARTING DEVICE, PARTICULARLY FOR VEHICLES

(30) Priorité: 18.02.1993 FR 9301840
(43) Date de publication de la demande: 29.11.1995
(73) Titulaire: ANTONOV AUTOMOTIVE TECHNOLOGIES B.V., 3013 AL Rotterdam (NL)
(72) Inventeur: ANTONOV, Roumen, F-75008 Paris (FR)
(74) Mandataire: Pontet, Bernard
(86) Numéro de dépôt international: FR9400177
(87) Numéro de publication internationale: WO9419624

(56) Documents cités:
- WO-A-91/13275
- DE-A- 2 359 737
- FR-A- 1 341 321
- FR-A- 2 623 868
- US-A- 4 995 862

## Description

La présente invention concerne une transmission avec dispositif de démarrage progressif, en particulier pour véhicule.

De manière classique, la transmission d'un véhicule comprend une boîte de vitesses à multiples rapports commandés manuellement ou automatiquement, et, entre cette boîte de vitesses et le moteur, un dispositif d'embrayage ou de couplage hydraulique pour permettre au moteur de fonctionner lorsque le véhicule est à l'arrêt, et pour permettre la mise en mouvement progressive du véhicule par le moteur une fois que le moteur a été lui-même mis en marche.

Il y a en outre, en général, un volant d'inertie qui est entraîné en rotation par l'arbre du moteur et peut constituer l'un des plateaux de l'embrayage. Le volant d'inertie sert à assurer la continuité du fonctionnement du moteur lorsque l'embrayage est à l'état désaccouplé et/ou lorsque la boite de vitesses est au point mort, pour permettre à l'arbre moteur de franchir les plages angulaires où le couple fourni par le moteur est négatif. Lorsque le véhicule est en mouvement et que ses roues motrices sont accouplées au moteur, l'inertie du véhicule est suffisante pour entretenir le mouvement du moteur, et le volant d'inertie devient même alors désavantageux puisqu'il ajoute son propre moment d'inertie à l'inertie constituée par la masse du véhicule lors des accélérations.

D'une manière générale les dispositifs d'embrayage, de convertisseur de couple, de coupleur hydraulique et de volant d'inertie connus sont coûteux, lourds et encombrants.

On connaît encore d'après le WO-A-91 13275 une transmission comprenant un mécanisme différentiel dans lequel on réalise une situation de point mort en permettant à un organe de réaction d'effectuer une rotation inverse normalement interdite par une roue libre. Pour permettre cette rotation inverse, on libère la partie fixe de le roue libre en desserrant un frein interposé fonctionnellement entre ladite partie fixe et le carter de la transmission. Le frein est représenté comme étant du type à bande, conformément aux solutions classiques en matière de transmission. Ce type de frein n'est viable commercialement que si sa durée de vie est du même ordre de grandeur que celle du véhicule qu'il équipe, car le remplacement du frein est complexe et nécessite le démontage au moins partiel de la transmission. Or le frein de ce document, assurant le passage progressif de la situation de point mort à la situation où du mouvement est transmis à la sortie, doit fournir à chaque mise en mouvement progressif du véhicule une relativement grande quantité d'énergie cinétique, proportionnelle à la masse du véhicule

Le but de l'invention est de proposer une transmission du genre décrit dans le WO-A-91 13275 mais où le frein servant à assurer la mise en mouvement progressive de la sortie ne pose pas de problèmes compliqués pour l'entretien de la transmission.

Suivant l'invention, la transmission dans laquelle un dispositif de transmission du type différentiel comprend des éléments rotatifs à dentures interengrenées dont l'un est relié à une entrée et l'autre est relié à une sortie du dispositif, les éléments rotatifs comprenant un élément de réaction et la transmission comprenant en outre des moyens de blocage sélectif interposés fonctionnellement entre l'élément de réaction et un carter de la transmission, les éléments de blocage sélectif comprenant des moyens à fonction de roue libre pour permettre à l'élément de réaction de tourner dans le même sens que l'entrée et la sortie lorsqu'un dispositif d'accouplement sélectif relie au moins indirectement les éléments rotatifs du mécanisme différentiel pour produire un fonctionnement en prise directe, dispositif dans lequel, au moins lorsque les moyens à fonction de roue libre sont à l'état bloqué l'élément de réaction est solidaire en rotation d'un rotor d'un frein pouvant être sélectivement libéré pour libérer le rotor et l'élément de réaction par rapport au carter et faire fonctionner la transmission dans un état de point mort, et être progressivement activé pour progressivement immobiliser le rotor par rapport au carter pour permettre à l'élément de réaction d'être sélectivement immobilisé et respectivement libéré par rapport au carter par les moyens à fonction de roue libre, est caractérisée en ce que le frein est un frein à disque, dont le disque constitue ledit rotor, ou en ce que le frein est une pompe hydraulique associée à une vanne de fermeture d'un conduit de refoulement de cette pompe.

Ces deux solutions surprenantes résolvent le problème d'entretien de la transmission. Les garnitures de friction d'un frein à disque, si elles sont usées, sont faciles à remplacer. La pompe hydraulique, quant à elle, a une durée de vie au moins aussi longue que le reste de la transmission.

Le rotor de frein est avantageusement réalisé massif pour former volant d'inertie. On obtient ainsi l'avantage que ce volant d'inertie ne tourne que lorsque cela est nécessaire, c'est à dire lorsque le moteur est désaccouplé des roues du véhicule. On réduit ainsi la charge inertielle entraînée par le moteur lors des accélérations, et on améliore donc les performances d'accélération du véhicule.

On peut cependant laisser subsister un volant d'inertie de taille réduite entraîné directement par le vilebrequin du moteur pour éviter que les vibrations torsionnelles produites par le moteur soient transmises en totalité à la transmission et au-delà.

D'autres particularités et avantages de l'invention ressortiront encore de la description ci-après, relative à des exemples non-limitatifs.

Aux dessins annexés :
- la figure 1 est une vue en coupe longitudinale schématique d'une transmission à quatre rapports selon l'invention comprenant plusieurs dispositifs de transmission successifs, au repos en haut de la figure et au point mort en bas de la figure ;
- la figure 2 est une vue à échelle agrandie de la partie supérieure gauche de la figure 1 ;
- les figures 3 et 4 sont des vues analogues à la moitié supérieure de la figure 1, mais relatives au fonctionnement en 2ième vitesse, et respectivement en 4ième vitesse ;
- la figure 5 est une vue de face schématique de la pompe de démarrage des figures 1 à 4 ;
- la figure 6 est un schéma hydraulique pour le pilotage automatique de la pompe de démarrage ;
- les figures 7 et 8 sont relatives à deux variantes de schéma hydraulique pour le pilotage automatique de la pompe de démarrage ; et
- la figure 9 correspond à la partie supérieure gauche de la figure 1, mais dans le cas d'un deuxième mode de réalisation du frein de démarrage.

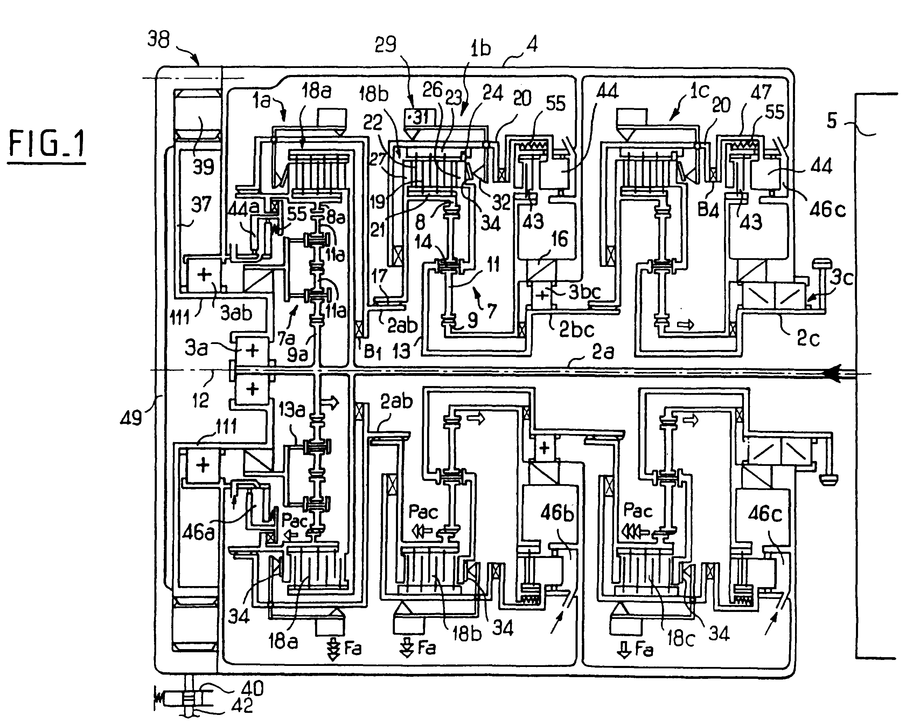

La transmission à quatre rapports représentée à la figure 1, destinée en particulier à une automobile, comprend trois dispositifs de transmission -ou modules- successifs 1a, 1b, 1c, à deux rapports chacun, montés en série entre un arbre d'entrée 2a et un arbre de sortie 2c de la transmission. L'arbre d'entrée 2a constitue aussi l'arbre d'entrée dans le module la. Il est relié à l'arbre de sortie d'un moteur 5 de véhicule sans interposition d'embrayage. L'arbre de sortie 2c constitue en même temps l'arbre de sortie du module 1c et comporte une roue dentée destinée à entraîner par engrènement l'entrée d'un différentiel pour l'entraînement des roues motrices d'un véhicule. Entre la roue dentée et l'entrée du différentiel peut être interposé un inverseur marche avant - marche arrière à commande manuelle.

L'arbre d'entrée 2a traverse toute la transmission, le premier module la étant le plus éloigné du moteur du véhicule. Le troisième module 1c est le plus proche du moteur, de sorte que la roue dentée de sortie est tout près du moteur. Les modules 1b et 1c sont disposés autour de l'arbre d'entrée 2a sans être liés en rotation à lui.

Il y a le long de l'axe géométrique 12 de la transmission, entre l'arbre d'entrée 2a et l'arbre de sortie 2c, deux arbres intermédiaires successifs 2ab, 2bc, qui constituent chacun l'arbre de sortie du module 1a, 1b respectivement situé en amont, et l'arbre d'entrée du module 1b, 1c respectivement situé en aval. Les arbres d'entrée 2a, intermédiaires 2ab, 2bc et de sortie 2c sont immobilisés axialement relativement à un carter 4 de la transmission. Pour cela, l'arbre d'entrée 2a est supporté en rotation, avec immobilisation axiale, dans un moyeu 11 au moyen d'un palier 3a. Le moyeu 11 est lui-même supporté en rotation, avec immobilisation axiale, relativement au carter 4 par un palier 3ab. L'arbre intermédiaire 2ab est immobilisé axialement par appui axial, avec liberté de rotation relative, contre l'arbre d'entrée 2a au moyen d'une butée axiale B1. L'arbre intermédiaire 2bc et l'arbre de sortie 2c sont chacun supportés par un palier à roulement 3bc, 3c relativement au carter 4.

Chaque module est capable de fonctionner en réducteur ou en prise directe. Un premier rapport est réalisé lorsque les trois modules fonctionnent en réducteur, un deuxième rapport lorsque le premier module la fonctionne en prise directe et les deux autres en réducteur, un troisième rapport avec les deux premiers modules 1a et 1b en prise directe et le troisième 1c en réducteur, et un quatrième rapport avec les trois modules en prise directe.

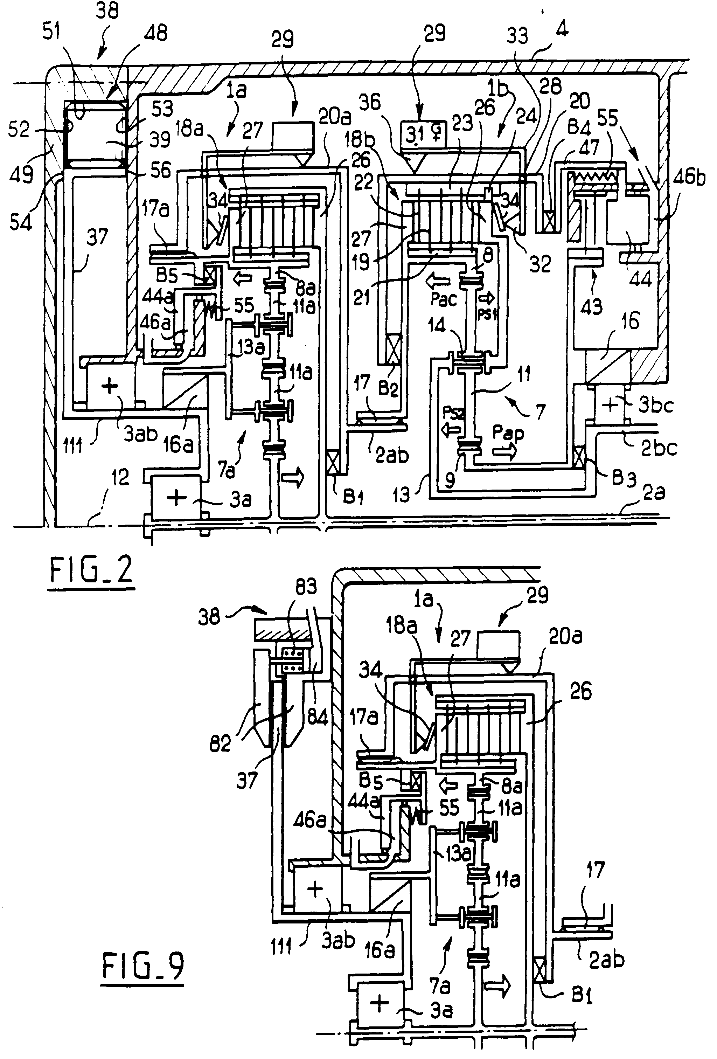

On va maintenant décrire plus en détail, en référence à la figure 2 le module 1b, cette description étant valable aussi pour le module 1c qui est identique au module 1b excepté que son arbre d'entrée est l'arbre 2bc et que son arbre de sortie est l'arbre 2c supporté par le palier 3c.

Un train épicycloïdal 7 comprend une couronne 8 à denture intérieure et une roue planétaire 9 à denture extérieure, engrenant toutes deux avec des satellites 11 supportés, à intervalles angulaires égaux autour de l'axe 12 du dispositif de transmission, par un porte-satellites 13 relié rigidement à l'arbre de sortie 2bc. Les satellites 11 peuvent tourillonner librement autour de tourillons excentrés 14 du porte-satellites 13. La roue planétaire 9 peut tourner librement autour de l'axe 12 du dispositif de transmission par rapport à l'arbre de sortie 2bc qu'elle entoure. Toutefois, un dispositif de roue libre 16 empêche la roue planétaire 9 de tourner en inverse, c'est à dire en sens inverse du sens normal de rotation de l'arbre d'entrée 2ab, par rapport au carter 4 de la transmission.

La couronne 8 est liée en rotation, mais libre en coulissement axial relativement à l'arbre d'entrée 2ab du module, par l'intermédiaire de cannelures 17.

Un embrayage 18b est disposé autour de la couronne 8. Il comprend un empilement de disques annulaires 19 alternant avec des disques annulaires 22. Les disques 19 sont reliés en rotation à la couronne 8 avec possibilité de coulissement axial. Pour cela, les disques 19 ont des dents intérieures engagées dans des cannelures 21 solidaires de la couronne 8. Les disques 22 sont liés en rotation, avec possibilité de coulissement axial, au porte-satellites 13. Pour cela, une cage 20 comporte, sur sa face radialement intérieure, des cannelures 23 dans lesquelles sont engagées de façon axialement coulissante d'une part des dents extérieures des disques 22 et d'autre part des dents extérieures 24 du porte-satellites 13.

L'empilement de disques 19 et 22 peut être serré axialement entre un plateau de retenue 26 solidaire du porte-satellites 13 et un plateau mobile 27 qui est solidaire de la couronne 8. Le plateau 27 est donc mobile axialement avec la couronne 8.

La cage 20 supporte des masselottes centrifuges 29 disposées en couronne autour de l'embrayage 18b.

Les masselottes sont donc liées en rotation à l'arbre de sortie 2bc du module 1b auquel elles appartiennent.

Chaque masselotte a un corps massif 31 situé radialement à l'extérieur des disques 19 et 22 et un bec d'actionnement 32 appuyé contre une face extérieure du plateau fixe 26 par l'intermédiaire d'un ressort belleville 34. Le bec 32 est relié au corps massif 31 par un bras coudé 33 articulé à la cage 20 autour d'un axe géométrique 28 orienté tangentiellement par rapport à l'axe 12 du dispositif. Le WO-A-91/13275 décrit des dispositions avantageuses pour le montage articulé de telles masselottes. Le centre de gravité G de la masselotte est situé à l'intérieur ou au voisinage du corps massif 31, en une position qui présente par rapport à l'axe 28 un certain écartement mesuré parallèlement à l'axe 12 du dispositif.

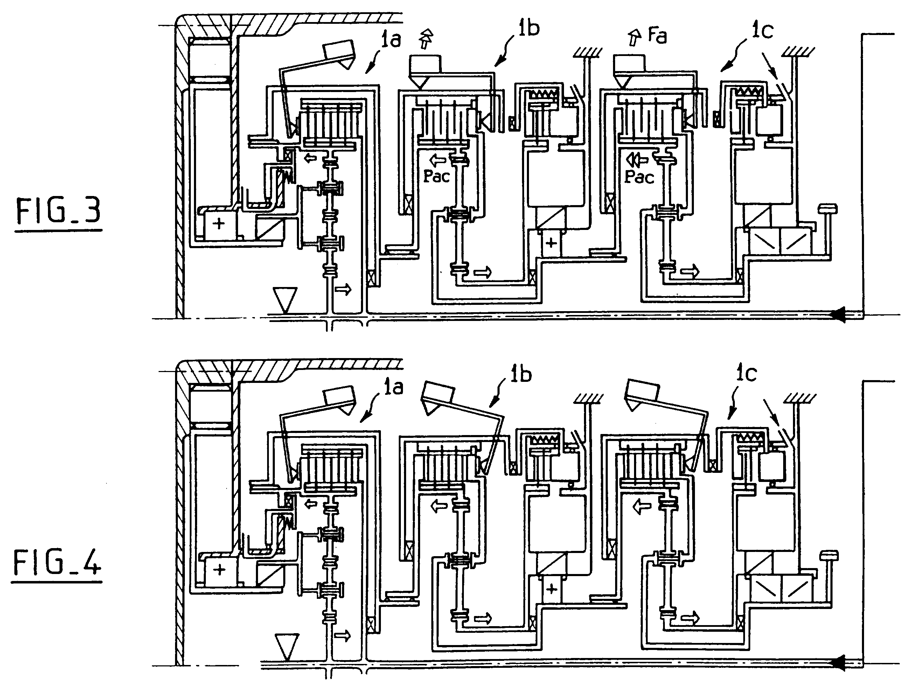

Ainsi, la rotation du porte-satellites 13 tend à faire pivoter radialement vers l'extérieur les corps 31 des masselottes 29 autour de leur axe tangentiel 28 sous l'action de leur force centrifuge Fa, pour les faire passer d'une position de repos définie par une butée 36 contre la cage 20 à une position écartée visible à la figure 4.

Il en résulte alors un déplacement axial relatif entre le bec 32 et l'axe d'articulation 28 de la masselotte, donc entre le bec 32 et la cage 20. Relativement au sens de déplacement correspondant à l'écartement centrifuge des masselottes 29, la cage 20 est appuyée axialement contre la couronne 8, avec liberté de rotation relative, par une butée axiale B2.

Ainsi, le déplacement de la cage 20 par rapport au bec 32 provoque un mouvement de rapprochement relatif entre le bec 32 et le plateau mobile 27 de l'embrayage 18b. Ce déplacement relatif peut correspondre à une compression du ressort belleville 34 et/ou à un déplacement du plateau mobile 27 vers le plateau fixe 26 dans le sens du serrage de l'embrayage 18b.

Lorsque la transmission est au repos comme représenté en haut de la figure 1 et à la figure 2, le ressort belleville 34 transmet à la cage 20, par l'intermédiaire des masselottes 29 en butée au repos, une force qui serre l'embrayage 18b de sorte que l'entrée 2ab du module 1b est couplée en rotation avec la sortie 2bc et le module constitue une prise directe capable de transmettre du couple jusqu'à un certain maximum défini par la force de serrage du ressort belleville.

D'autre part, les dentures de la couronne 8, des satellites 11 et de la roue planétaire 9 sont de type hélicoïdal. Ainsi, dans chaque couple de dentures engrenant sous charge, il apparaît des poussées axiales opposées proportionnelles à la force circonférentielle transmise, donc au couple sur l'arbre d'entrée 2ab et au couple sur l'arbre de sortie 2bc. Le sens d'inclinaison hélicoïdale des dentures est choisi pour que le sens de la poussée axiale Pac prenant naissance dans la couronne 8 lorsqu'elle transmet un couple moteur soit tel que le plateau mobile 27, entraîné axialement par la couronne 8, s'écarte du plateau de retenue 26 de l'embrayage. Les satellites 11, qui engrènent non seulement avec la couronne 8 mais aussi avec la roue planétaire 9, subissent deux réactions axiales opposées PS1 et PS2, qui s'équilibrent, et la roue planétaire 9 subit, compte-tenu de son engrènement avec les satellites 11, une poussée axiale Pap qui est égale en intensité et opposée à la poussée axiale Pac de la couronne 8. La poussée Pap de la roue planétaire 9 est transmise au carter 4 par l'intermédiaire d'une butée B3, du porte-satellites 13 et du palier 3bc. Ainsi, la poussée axiale Pac s'exerce sur le plateau mobile 27 de l'embrayage et par rapport au carter 4, donc par rapport au plateau de retenue 26 de l'embrayage, et ceci dans le sens tendant à desserrer l'embrayage 18b. Cette force, transmise par la butée B2 à la cage 20, tend aussi à rapprocher l'un de l'autre le bec 32 des masselottes 29 et le plateau de retenue 26, donc à maintenir les masselottes 29 dans leur position de repos et à comprimer le ressort belleville 34.

C'est la situation représentée à la figure 3. En supposant cette situation réalisée, on va maintenant décrire le fonctionnement de base du module 1b. Tant que le couple transmis au module par l'arbre d'entrée 2ab est tel que la poussée axiale Pac dans la couronne 8 suffit pour comprimer le ressort belleville 34 et maintenir les masselottes 29 dans la position de repos représentée à la figure 3, l'écartement entre le plateau de retenue 26 et le plateau mobile 27 de l'embrayage est tel que les disques 19 et 22 glissent les uns contre les autres sans transmettre de couple entre eux. Dans ce cas, le porte-satellites 13 peut tourner à une vitesse différente de celle de l'arbre d'entrée 2ab, et il tend à être immobilisé par la charge que doit entraîner l'arbre de sortie 2bc du module. Il en résulte que les satellites 11 tendent à se comporter en inverseurs de mouvement, c'est à dire à faire tourner la roue planétaire 9 en sens inverse du sens de rotation de la couronne 8. Mais ceci est empêché par la roue libre 16. La roue planétaire 9 est donc immobilisée par la roue libre 16 et le porte-satellites 13 tourne à une vitesse qui est intermédiaire entre la vitesse nulle de la roue planétaire 9 et la vitesse de la couronne 8 et de l'arbre d'entrée 2ab. Le module fonctionne donc en réducteur. Si la vitesse de rotation augmente et que le couple reste inchangé, il arrive un instant où la force centrifuge produit entre le plateau de retenue 26 et le plateau mobile 27 une force axiale de serrage plus grande que la poussée axiale Pac, et le plateau mobile 27 est poussé vers le plateau 26 pour réaliser la prise directe.

Lorsque l'embrayage 18b est serré, les dentures du train épicycloïdal 7 ne travaillent plus, c'est à dire qu'elles ne transmettent plus aucune force et elles ne donnent donc naissance à aucune poussée axiale. Ainsi, la poussée axiale due à la force centrifuge peut s'exercer pleinement pour serrer les plateaux 26 et 27 l'un vers l'autre. On comprend alors mieux le processus de passage en prise directe : dès que les disques 19 et 22 commencent à frotter les uns contre les autres et transmettent une partie de la puissance, les dentures sont déchargées d'autant, la poussée axiale Pac diminue d'autant, et la suprématie de la force centrifuge se confirme de plus en plus jusqu'à ce que l'embrayage 18b assure totalement la prise directe.

Il peut alors arriver que la vitesse de rotation de l'arbre de sortie 2ab diminue, et/ou que le couple à transmettre augmente, au point que les masselottes 29 n'assurent plus dans l'embrayage 18b une force de serrage suffisante pour transmettre le couple. Dans ce cas, l'embrayage 18b commence à patiner. La vitesse de la roue planétaire 9 diminue jusqu'à s'annuler. La roue libre 16 immobilise la roue planétaire et la force de denture Pac réapparaît pour desserrer l'embrayage, de sorte que le module fonctionne ensuite en réducteur. Ainsi, chaque fois qu'un changement entre le fonctionnement en réducteur et le fonctionnement en prise directe s'opère, la force axiale Pac varie dans le sens qui stabilise le rapport de transmission nouvellement institué. Ceci est très avantageux d'une part pour éviter les changements de rapport incessants autour de certains points de fonctionnement critiques, et d'autre part pour que les situations de patinage de l'embrayage 18b ne soient que transitoires.

Le rôle du ressort belleville 34 est double. D'une part, en serrant les embrayages lorsque la transmission est au repos, il réalise un couplage mécanique entre l'entrée et la sortie du module. Cette fonction étant assurée dans les trois modules, le véhicule à l'arrêt est retenu par le moteur lorsque celui-ci est lui-même à l'arrêt. Si l'embrayage 18b était desserré au repos, le véhicule ne serait pas empêché de rouler librement en marche avant car dans ce cas l'immobilisation de la couronne 8 par le moteur 5 ferait tourner la roue planétaire 9 en sens normal, ce que la roue libre 16 n'empêche pas.

D'autre part, le ressort belleville 34 permet au module de fonctionner en prise directe pour des vitesses, relativement basses, où la force centrifuge, proportionnelle au carré de la vitesse, serait si faible que le moindre couple à transmettre provoquerait, de manière non souhaitable en pratique, un maintien ou une tendance au retour au fonctionnement en réducteur.

On va maintenant exposer les différences présentées par le module la par rapport au module 1b.

L'utilisation d'un train épicycloïdal avec l'entrée sur la couronne et la sortie sur le porte-satellites ne permet guère de réaliser des rapports de réduction supérieurs à 1,4. Avec un tel rapport, la réduction de la vitesse du moteur lors du passage en 2ème vitesse serait de 40 %. Ceci est un peu faible pour le passage de première en deuxième vitesse. Si l'on fait l'entrée par le planétaire et la sortie par le porte-satellites, le rapport de réduction est en pratique au minimum de 3, ce qui est trop. On peut par contre réaliser pratiquement n'importe quel rapport de réduction en entrant par le planétaire et en sortant par la couronne, mais dans ce cas la couronne tourne en sens contraire du planétaire, ce qui est un inconvénient rédhibitoire puisque le sens de rotation de la couronne ne serait pas le même pour le fonctionnement du module en prise directe et son fonctionnement en réducteur.

Pour résoudre simultanément toutes ces difficultés, le module la a son arbre d'entrée 2a relié à la roue planétaire 9a, son arbre de sortie 2ab entraîné par la couronne 8a, et pour que le sens de rotation de la couronne 8a soit le même que celui de la roue planétaire 9a même lors du fonctionnement en réducteur, chaque satellite est remplcé par une cascade de deux satellites lla engrenant ensemble et engrenant l'un avec la roue planétaire 9a et l'autre avec la couronne 8a. Le porte-satellites 13a est relié au moyeu 111 par une roue libre 16a.

Le moyeu 111 est solidaire du rotor 37 d'un frein de démarrage 38.

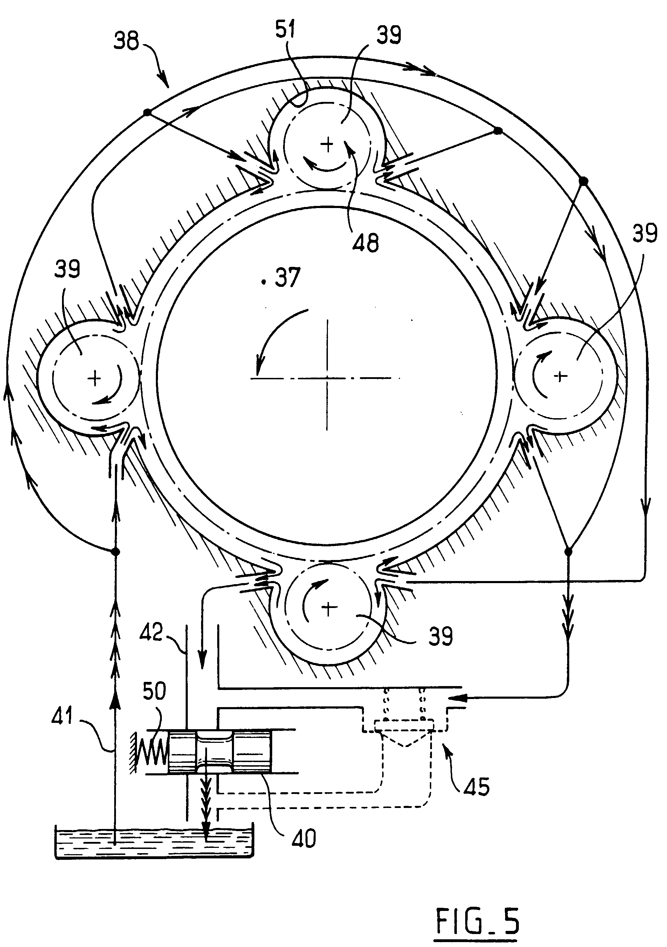

Comme le montre également la figure 5, le frein 38 est constitué par une pompe à engrenages dont le rotor 37 constitue une roue planétaire menante entraînant quatre satellites de pompage 39 qui sont hydrauliquement en parallèle les uns avec les autres entre une aspiration 41 et un refoulement 42 qui peuvent être tous deux reliés à une réserve d'huile de lubrification de la transmission. Une vanne 40 est montée dans le conduit de refoulement 42 pour sélectivement permettre ou empêcher le flux d'huile à travers la pompe, ou encore créer une perte de charge réglable à la sortie de la pompe. Lorsque la vanne 40 est fermée, l'huile, empêchée de circuler, bloque la pompe, de sorte que le rotor 37 ne peut plus tourner et la roue libre 16a ne permet au porte-satellites 13a que de tourner dans le sens normal. Si au contraire la vanne 40 est ouverte, le rotor 37 tourne librement. Dans ce cas, le porte-satellites 13a peut tourner en inverse en entraînant le moyeu 111 avec lui par la roue libre 16a, ce qui provoque le pompage dans le sens représenté à la figure 5. On provoque l'ouverture de la vanne 40 pour réaliser automatiquement une condition de point mort, c'est à dire de désaccouplement entre les arbres d'entrée 2a et de sortie 2c lorsque le véhicule est à l'arrêt (arbre de sortie 2c immobile) alors que l'arbre d'entrée 2a tourne. C'est grâce à cette fonction que l'on peut supprimer l'embrayage ou le convertisseur de couple traditionnellement monté entre le moteur 5 et la transmission. Pour provoquer la mise en mouvement progressive de l'arbre de sortie 2c, on ferme progressivement la vanne 40 pour freiner progressivement le rotor 37 au moyen d'une perte de charge croissante à travers la vanne 40.

En variante, on peut prévoir de monter en parallèle avec la vanne 40 un clapet anti-retour 45 permettant à l'huile de contourner la vanne 40 si elle tend à circuler en sens inverse de celui représenté à la figure 5, c'est à dire si l'huile tend à être aspirée à travers le refoulement 42, et refoulée à travers l'aspiration 41. Grâce à ce clapet anti-retour 45, il est possible de supprimer la roue libre 16a, la fonction de roue libre étant assurée hydrauliquement par le clapet anti-retour 45. Cette solution supprime l'encombrement, relativement important, d'une roue libre, mais introduit une perte par frottement hydraulique lorsque le module la fonctionne en prise directe, situation dans laquelle le porte-satellites 13a tourne dans le sens normal à la même vitesse que l'arbre d'entrée 2a.

Comme le montre encore la figure 2, la pompe hydraulique matérialisant le frein 38 est réalisée de manière particulièrement simple : chaque satellite 39 est simplement enfermé dans une alvéole 48 d'un couvercle 49 fixé contre l'extrémité du carter 4 opposée au moteur 5. La surface périphérique 51 des alvéoles est en contact d'étanchéité avec les sommets des dents des satellites 39 et la surface de fond 52 des alvéoles 48 ainsi que la face terminale extérieure 53 du carter 4 sont en contact d'étanchéité avec les deux faces radiales de chaque satellites 39. En outre, le rotor 37 comprend, de part et d'autre de sa denture, deux faces annulaires 54 et 56, opposées, qui sont en contact d'étanchéité l'une avec le fond intérieur du couvercle 49 et l'autre avec la face extérieure 53 du carter 4. Ce sont les différents contacts d'étanchéité des sommets de dents des satellites et des faces radiales des satellites avec le couvercle 49 et le carter 4 qui assurent en même temps le guidage en rotation des satellites.

La cage 20a pour les masselottes 29 du module la est, comme dans les autres modules 1b et 1c, solidaire en rotation de l'arbre de sortie 2ab du module, mais elle en est aussi solidaire axialement. La cage 20a, et avec elle les axes 28 des masselottes 29, n'ont donc pas de mobilité axiale.

Par contre, les becs 32 des masselottes 29 s'appuient non plus sur le plateau de retenue 26, mais sur le plateau mobile 27 de l'embrayage 18a, toujours par l'intermédiaire d'un ressort belleville 34. Le plateau mobile 27 est comme dans les autres modules solidaire de la couronne 8a, qui est mobile axialement grâce à des cannelures 17a par rapport à la cage 20a liée en rotation à l'arbre de sortie 2ab. Le plateau de retenue 26 est solidaire de l'arbre d'entrée 2a.

Le fonctionnement du module la est similaire à celui des modules 1b et 1c. Les masselottes ou le ressort belleville 34 tendent à serrer l'embrayage 18a avec une force qui détermine le couple maximum transmissible, et lors du fonctionnement en réducteur la force axiale de denture hélicoïdale de la couronne 8a, pousse le plateau mobile 27 dans le sens desserrant l'embrayage.

On va maintenant expliquer le fonctionnement général des trois modules 1a, 1b, 1c.

Si l'on considère le cas où tous les modules 1a-1c fonctionnent en réducteur (partie inférieure de la figure 1), ce qui réalise le premier rapport du dispositif de transmission, c'est dans le module la que la vitesse est la plus forte et le couple est le plus faible, comme cela est illustré par une triple flèche Fa et une simple flèche Pac. C'est donc ce premier module la qui passe le premier en prise directe lorsque le véhicule accélère, comme représenté à la figure 3. Le couple diminue dans le second module 1b, car il n'est plus augmenté par la démultiplication dans le premier module, mais les vitesses de rotation dans le second module restent inchangées, donc inférieures à celles dans le premier module juste avant le changement, car elles sont déterminées par la vitesse de rotation des roues du véhicule. Il faut donc que la vitesse du véhicule augmente encore pour que le second module atteigne à son tour les conditions de passage en prise directe si le couple fourni par le moteur demeure inchangé. Et ainsi de suite jusqu'à ce que tous les modules du dispositif de transmission soient en prise directe comme représenté à la figure 4. Ainsi, des modules, tous essentiellement identiques, s'organisent spontanément pour réaliser un passage échelonné des rapports de vitesse. Les différences qu'on a décrites à propos du module la sont sans incidence à cet égard.

Pour que, parmi les modules qui fonctionnent en prise directe dans une situation donnée, celui qui rétrograde soit toujours celui qui est le plus proche fonctionnellement de l'arbre de sortie 2c, on peut prévoir que les modules ont d'autant moins de masselottes, ou des masselottes d'autant plus légères, ou encore d'autant moins de disques dans leur embrayage, qu'ils sont plus proches fonctionnellement de la sortie. Mais il s'agit simplement de nuancer la réponse au couple transmis, avec des variations de quelques % d'un module au voisin.

On va maintenant décrire en référence à la figure 2 et à propos du module 1b des moyens complémentaires prévus dans les modules 1b et 1c pour les faire fonctionner sélectivement en réducteur dans des conditions différentes de celles déterminées par les forces axiales du ressort belleville 34, des masselottes centrifuges 29 et de denture de la couronne 8.

Pour cela, le module 1b comprend un frein 43 qui permet d'immobiliser la roue planétaire 9 relativement au carter 4 indépendamment de la roue libre 16. En d'autre termes, le frein 43 est monté fonctionnellement en parallèle avec la roue libre 16 entre la roue planétaire 9 et le carter 4. Un piston hydraulique 44 est monté axialement coulissant pour sélectivement serrer et desserrer le frein 43. Le frein 43 et le piston 44 ont une forme annulaire ayant pour axe l'axe 12 de la transmission. Le piston 44 est adjacent à une chambre hydraulique 46b qui peut être sélectivement alimentée en huile sous pression pour solliciter le piston 44 dans le sens du serrage du frein 43, à l'encontre de l'action d'un ressort de rappel 55.

De plus, le piston 44 est relié rigidement à un poussoir 47 qui peut s'appuyer contre la cage 20 au moyen d'une butée axiale B₄. Le montage est tel que lorsque la pression régnant dans la chambre 46b pousse le piston 44 dans la position de serrage du frein 43, la cage 20, avant que le frein 43 ne soit serré, est repoussée de manière suffisante pour que l'embrayage 18b soit relâché.

Ainsi, lorsque le piston 44 est dans la position de serrage du frein, la roue planétaire 9 est immobilisée même si le porte-satellites 13 tend à tourner plus vite que la couronne 8, comme c'est le cas lors du fonctionnement en retenue, et par conséquent le module fonctionne en réducteur, comme le permet le desserrage de l'embrayage 18b.

L'ensemble 43, 44, 46b, 47 qui vient d'être décrit constitue donc un moyen qui peut être mis à la disposition du conducteur du véhicule pour obliger le module à fonctionner en réducteur lorsqu'il souhaite augmenter l'effet de frein moteur, par exemple en descente.

On a vu plus haut que les ressorts belleville 34 placent tous les modules en prise directe lorsque le véhicule est à l'arrêt. Au démarrage, il faudrait donc que l'apparition des forces de denture Pac fasse passer tous les modules au fonctionnement en réducteur pour que le démarrage s'effectue ensuite sous le premier rapport. Ceci peut créer systématiquement une secousse désagréable. Pour éviter cela, il est prévu que l'ensemble frein 43 piston 44 et poussoir 47 place le module 1b dans son état "réducteur" lorsque le moteur tourne mais que la mise en mouvement de l'arbre de sortie 2c n'a pas encore eu lieu, de façon que la transmission opère selon son premier rapport de transmission dès le début de la mise en mouvement de l'arbre de sortie 2c.

Des moyens non représentés, par exemple à commande manuelle, sont prévus pour alimenter sélectivement la chambre hydraulique 46b en vue des fonctions qui viennent d'être décrites. On peut ainsi, par exemple obliger le module à fonctionner en réducteur dans des conditions où l'équilibre entre les forces de denture, la force du ressort 34 et celle des masselottes 29 aurait entraîné un fonctionnement en prise directe.

Le module 1c possède un frein 43, un piston 44 , une chambre 46c et un poussoir 47 ainsi qu'une butée B4, identiques à ceux du module 1b.

Par contre, le module la est différent. Il comporte bien un piston 44a adjacent à une chambre hydraulique 46a, mais aucun frein tel que 43 n'est prévu en parallèle avec la roue libre 16a, et d'autre part le piston 44 agit par une butée B5 non pas sur la cage 20a qui est axialement immobile, mais sur la couronne 8a et le plateau mobile 27 de l'embrayage 18a dans le sens du desserrage de l'embrayage 18a. Ce montage a simplement pour but de permettre de desserrer l'embrayage 18a lorsque le véhicule est à l'arrêt mais que l'arbre 2a est déjà en rotation, comme cela est permis si la vanne 40 est en position d'ouverture. Le piston 44a est également utilisable pour favoriser le fonctionnement en réducteur pour une conduite dite "sportive". Par contre, le piston 44a n'est pas utilisable pour réaliser un fonctionnement en réducteur lorsque le moteur fonctionne en retenue. Il a en effet été estimé inutile en pratique de créer la possibilité d'un fonctionnement en retenue sur le premier rapport de la transmission.

On va maintenant revenir en référence aux figures 1, 3 et 4 aux différents états de la transmission dans son ensemble.

A la figure 1, partie supérieure, la transmission est au repos en prise directe car tous les embrayages 18a, 18b sont serrés et le frein de démarrage 38 est bloqué car la vanne 40 est ramenée en position de fermeture par son ressort de rappel 50. Les pistons 44 et 44a sont poussés vers leur position inactive sous l'action des ressorts de rappel 55.

Dans la situation représentée en bas de la figure 1, on a représenté la vanne 40 en position d'ouverture de façon à libérer le rotor 37. On a également représenté les chambres hydrauliques 46a, 46b, 46c alimentées de façon à desserrer les embrayages 18a, 18b et 18c en comprimant les ressorts belleville 34 correspondants, ainsi que les ressorts de rappel 55 des pistons. C'est la situation lorsque le moteur 5 fonctionne, par exemple au ralenti, alors que l'arbre de sortie 2c est immobile (véhicule à l'arrêt). Le dispositif de démarrage 38 permet alors à l'arbre d'entrée 2a de tourner sans qu'il y ait rotation de l'arbre de sortie 2ab du module la, et sans auncune rotation dans les deux autres modules 1b, 1c. C'est le porte-satellites 13a et le moyeu 11 qui tournent en sens inverse de la normale pour permettre cette situation. A ce stade, le rotor 37 ajoute son effet d'inertie à celui du volant d'inertie traditionnel du moteur thermique 5. Ceci est très avantageux car le volant d'inertie d'un moteur thermique est surtout utile lors du fonctionnement au ralenti pour éviter que le moteur, non relié à une charge inertielle, soit incapable de poursuivre sa rotation lorsqu'un piston du moteur thermique arrive en fin de compression des gaz. Au contraire, lors du fonctionnement normal, le volant d'inertie du moteur thermique traditionnel grève les performances d'accélération du véhicule. Avec le rotor 37 ne tournant que lorsque le véhicule est à l'arrêt, d'une part une même stabilisation de ralenti est obtenue avec un volant d'inertie plus petit sur le moteur 5, et en plus l'inertie du rotor 37 disparaît lors du fonctionnement normal puisque le rotor 37 est alors arrêté.

Pour passer du fonctionnement en point mort correspondant à la situation qui vient d'être décrite pour la bas de la figure 1, à la situation de fonctionnement selon le premier rapport de transmission, on ferme progressivement la vanne 40 pour mettre progressivement en mouvement de rotation l'arbre de sortie 2ab du premier module et le mouvement est transmis en étant réduit de vitesse dans chaque module jusqu'à l'arbre de sortie 2c. Dès que le véhicule a atteint une certaine vitesse par exemple égale à cinq kilomètres/heure, on peut relâcher la pression dans les chambres hydrauliques 46a, 46b et 46c pour permettre aux forces de dentures Pac, aux forces centrifuges Fa et aux forces élastiques des ressorts 34 de jouer leur rôle de pilotage automatique de l'ensemble, comme décrit plus haut.

A partir de la situation de prise directe de l'ensemble de la transmission, on peut alimenter la chambre hydraulique 46c du module 1c pour activer le frein 43 et en même temps ramener l'embrayage 18c de ce module à l'état desserré. Ainsi, le piston 44 de ce module oblige celui-ci à fonctionner en réducteur, soit pour créer un effet de frein moteur accru, soit pour initier rapidement le retour au fonctionnement en réducteur en vue d'une forte accélération.

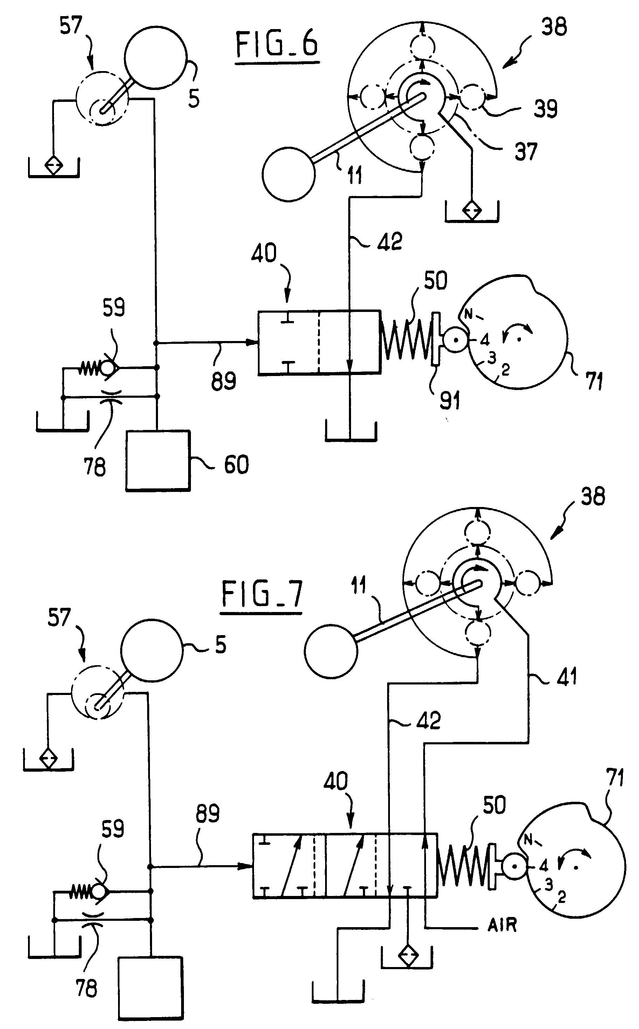

On va maintenant décrire en référence à la figure 6 un schéma hydraulique pour la commande automatique du frein de démarrage 38.

De manière non représentée aux figures 1 à 5, il est prévu à l'entrée de la transmission une pompe hydraulique d'entrée 57 entraînée par l'arbre 2a et tournant donc à la vitesse du moteur 5. La pompe d'entrée 57 alimente un circuit de lubrification 60 de la transmission, qui n'est représenté que très schématiquement. En outre, la pompe 57 débite vers l'atmosphère à travers un étranglement 78 de manière que la pression à la sortie de la pompe 57 soit fonction de la vitesse de rotation de cette pompe, c'est à dire de la vitesse de rotation de l'arbre du moteur 5. En parallèle avec l'étranglement 78 est monté un clapet de décharge 59 qui limite à par exemple 200kPa la pression dans le cicruit de refoulement de la pompe 57. Par conséquent, cette pression croit jusqu'à une vitesse de rotation de par exemple 2.000t/mn, puis est ensuite constante, égale à 200kPa.

La pression de refoulement de la pompe 57 est appliquée à une entrée de commande 89 de la vanne hydraulique 40 pour tendre à déplacer cette vanne 40 de la position d'ouverture, dans laquelle tend à la maintenir le ressort 50, vers la position de fermeture.

Une came 71, commandée manuellement, est mobile entre diverses positions "4", "3", "2", et "N". Les positions "4", "3", "2" correspondent à des commandes pour l'alimentation des chambres hydrauliques 46a, 46b et 46c. La position "N" est une position de point mort, dans laquelle le contre-appui 91 du ressort 50 est déplacé vers la vanne 40 de manière à comprimer le ressort 50 même quand la vanne 40 est en position d'ouverture, et empêcher ainsi le passage de la vanne 40 en position de fermeture quelle que soit la pression à l'entrée de commande 89.

Le fonctionnement de ce circuit hydraulique est le suivant :
- lorsque la came 71 est en position "N", la vanne 40 est obligatoirement en position d'ouverture de sorte que le frein 38 est obligatoirement relâché de manière à créer une situation de désaccouplement entre l'arbre d'entrée 2a et la sortie 2c de la transmission.

Quand la came 71 est sur l'une ou l'autre des positions "4", "3", ou "2", et que le moteur 5 tourne à la vitesse de ralenti (environ 800 t/mn), la force du ressort 50 est supérieure à celle produite par la pression à l'entrée 89 et la vanne 40 est en position d'ouverture.

Si le conducteur fait augmenter la vitesse de rotation du moteur 5, la pression à l'entrée de commande 89 augmente progressivement et fait progressivement passer la vanne 40 en position de fermeture. Le ressort 50 est conçu pour opposer une force de rappel fortement croissante à mesure que la vanne 40 se déplace vers la position de fermeture, de manière à éviter un passage brusque. Plus la vanne 40 se ferme et plus la pression dans le circuit de refoulement 42 du frein 38 augmente. Ceci provoque la mise en rotation progressive de la couronne 8a du module la, et par conséquent de la sortie 2c de la transmission.

L'exemple de la figure 7 ne sera décrit que pour ses différences par rapprort à celui de la figure 6.

Dans cet exemple, le ressort 50 tend à déplacer la vanne 40 vers une troisième position dans laquelle non seulement le refoulement 42 de la pompe de démarrage 38 est ouvert mais en outre l'aspiration 41 de la pompe de démarrage 38 est reliée à l'air. La vanne 40 est dans cette position quand la pression à l'entrée de commande 89 est inférieure à celle du ralenti normal, et correspond par exemple à 500 t/mn, indiquant que le moteur est sur le point de caler. Dans ce cas, il n'y a plus aucun frottement hydraulique dans la pompe de démarrage 38 car celle-ci aspire de l'air. Ceci peut permettre au moteur 5 de reprendre sa vitesse de rotation normale. Ceci est particulièrement vrai si la tendance du moteur a caler provient d'une température particulèrement basse, pour laquelle l'huile a une forte viscosité, produisant une forte résistance à la rotation dans la pompe de démarrage 38 même si le refoulement 42 est ouvert.

Si le moteur 5 est à sa vitesse de ralenti normale, environ 800 t/mn, la vanne 40 est dans une position intermédiaire dans laquelle, comme pour la position d'ouverture de la figure 6, la pompe de démarrage 38 aspire de l'huile et refoule librement celle-ci à la pression atmosphérique.

La troisième position de la vanne 40 est la position de fermeture du refoulement 42. Le démarrage progressif du véhicule s'effectue comme dans le cas de la figure 6 par un passage progressif de la vanne 40 de la position où l'huile est aspirée et librement refoulée, à la position où le refoulement est fermé.

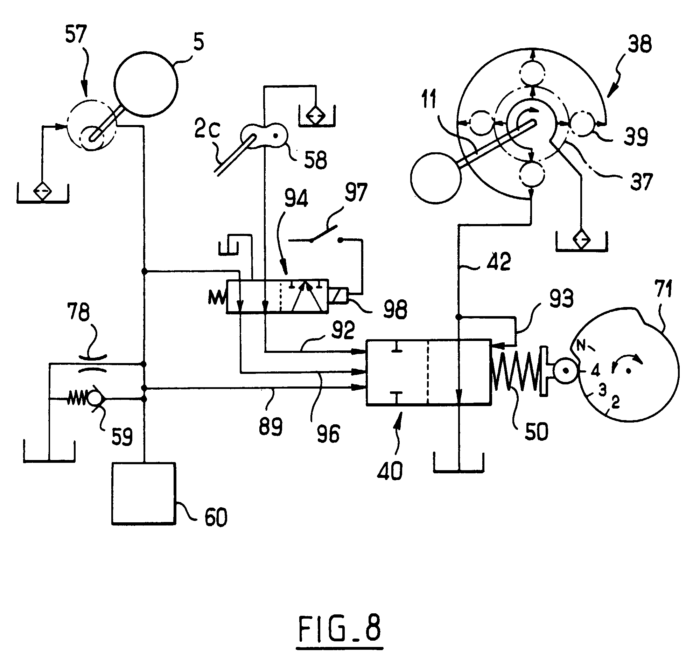

Dans l'exemple représenté à la figure 8, qui ne sera décrit que pour ses différences par rapport à celui de la figure 6, il est prévu, outre la pompe 57, une pompe hydraulique de sortie 58, disposée à la sortie de la transmission ou en aval de cette sortie. La pompe de sortie 58 est conçue en pompe tachymétrique délivrant une pression constituant une mesure de la vitesse de la sortie de la transmission, autrement dit une mesure de la vitesse de rotation des roues motrices du véhicule.

La vanne 40 comprend, du même côté que l'entrée de commande 89 une deuxième entrée de commande 92 qui est reliée au refoulement de la pompe de sortie 58. Il y a donc deux paramètres qui tendent à faire passer la vanne 40 en position de fermeture, à savoir la vitesse de rotation du moteur 5 et la vitesse des roues motrices du véhicule.

Par ailleurs, la pression règnant dans le refoulement 42 de la pompe de démarrage 38 constitue une mesure précise du couple transmis aux roues du véhicule. Dans l'exemple, cette pression est utilisée comme paramètre de contre-réaction, appliqué à une entrée de contre-réaction 93 pour tendre à maintenir la vanne 40 en position plus ouverte lorsque le couple transmis est plus important. Ainsi, d'une part on amortit les chocs en réouvrant la vanne 40 lorsque le couple transmis devient trop important. D'autre part, lorsque le couple transmis est élevé, le processus d'embrayage se prolonge jusqu'à ce que le véhicule et le moteur atteignent des vitesses plus élevées, ce qui optimise les performances d'accélération du moteur à partir de la situation véhicule à l'arrêt.

On notera que l'entrée de contre-réaction 93 serait également efficace avec une structure par ailleurs identique à celle décrite à la figure 6 ou à la figure 7, c'est à dire avec l'information "vitesse" fournie uniquement par une pompe 57 placée à l'entrée de la transmission.

Il est également prévu, dans l'exemple de la figure 8, une vanne de progressivité 94 qui, dans la position normale d'ouverture, met l'entrée de commande 92 en relation avec la sortie de la pompe tachymétrique 58 comme il a été décrit plus haut et raccorde en outre avec le refoulement de la pompe d'entrée 57 une troisième entrée 96 de la vanne 40, située du même côté que les première et deuxième entrées.

Au contraire, lorsqu'un contact 97 est commandé pour activer un solénoïde 98, la vanne de progressivité 94 passe dans une position dans laquelle les deuxième et troisième entrées 92 et 96 sont mises à la pression atmosphérique. Celà est utile sur sol glissant, par exemple sur la neige. En particulier, on supprime l'influence de la vitesse de rotation des roues du véhicule. Ainsi, le patinage des roues ne fait pas brusquement passer la vanne 40 en position de fermeture. De plus, en supprimant l'influence de la vitesse des roues et en réduisant celle de la vitesse du moteur (neutralisation des entrées de commande 92 et respectivement 96), on impose que le processus de mise en mouvement s'étende sur une large plage de vitesses de rotation du moteur. Ainsi, on augmente fortement la progressivité,de manière à réduire le couple de démarrage appliqué aux roues et par conséquent le risque de patinage.

Dans l'exemple représenté à la figure 9 qui ne sera décrit que pour ses différences par rapport à celui de la figure 2, le frein 38 est non plus une pompe hydraulique mais un frein à disque. Le rotor 37 du frein est un disque solidaire du moyeu 11. Le disque 37 coopère avec des mâchoires 82 portées par le carter 4, donc empêchées de tourner autour de l'axe 12. Un ressort 83 tend en permance à serrer les mâchoires 82 donc à immobiliser le moyeu 11. Dans ce cas la roue libre 16a ne permet au porte-satellites 13a que de tourner dans le sens normal. Un vérin hydraulique 84 peut être alimenté pour écarter les mâchoires à l'encontre de la force du ressort. Dans ce cas, le porte-satellites 13a peut tourner en inverse en entraînant le moyeu 11 avec lui par la roue libre 16a, de façon à réaliser la condition de point mort.

Pour mettre progressivement le véhicule en mouvement, on relâche progressivement la pression dans le vérin 84.

Le frein de démarrage 38 est monté à l'extérieur, à l'extrémité libre (opposée au moteur 5) du carter 4, de sorte qu'au besoin les garnitures de friction des mâchoires 82 peuvent être changées par une opération d'entretien très simple.

Cette disposition est permise, dans l'exemple, par le fait que le premier module la est reporté du côté de l'extrémité libre du carter 4 au lieu d'être du côté du moteur, et aussi au fait que la sortie 2ab du premier module la est reliée à la couronne 8a de son train épicycloïdal. On voit en effet que si la couronne 8a avait été reliée à l'entrée (2a) du module la (comme c'est le cas dans les modules 1b et 1c), il y aurait eu du côté du train épicycloïdal 7a opposé au moteur 5, un flasque radial reliant l'arbre 2a et la couronne 8a, et ce flasque aurait empêché, de ce côté-ci du train épicycloïdal, toute liaison directe entre le porte-satellites et l'extérieur du carter. La disposition particulière du train. planétaire 7a du premier module la a donc le double avantage de donner un meilleur échelonnement entre le 1er et le 2ème rapport de transmission, comme exposé plus haut, et de permettre de ramener à l'extérieur du carter 4 le dispositif de démarrage 38. Bien entendu les paliers 3a et 3ab sont associés à des moyens d'étanchéité convenables.

Bien entendu, l'invention n'est pas limitée aux exemples décrits et représentés.

La transmission n'est pas nécessairement agencée en modules successifs.

Le frein de démarrage pourrait être d'une autre nature, par exemple un frein à bande.

Le frein pourrait être commandé par le conducteur du véhicule, par exemple au moyen d'une pédale de débrayage classique.

## Revendications

1. Transmission dans laquelle un dispositif de transmission (1a) du type différentiel (7a) comprend des éléments rotatifs à dentures interengrenées dont l'un est relié à une entrée (2a) et l'autre est relié à une sortie (2ab) du dispositif, les éléments rotatifs (8a, 9a, 13a) comprenant un élément de réaction (13a) et la transmission comprenant en outre des moyens de blocage sélectif (16, 38) interposés fonctionnellement entre l'élément de réaction (13a) et un carter (4) de la transmission, les éléments de blocage sélectif comprenant des moyens à fonction de roue libre (16a, 45) pour permettre à l'élément de réaction (13a) de tourner dans le même sens que l'entrée (2a) et la sortie (2ab) lorsqu'un dispositif d'accouplement sélectif (18) relie au moins indirectement les éléments rotatifs du mécanisme différentiel (7) pour produire un fonctionnement en prise directe, dispositif dans lequel, au moins lorsque les moyens à fonction de roue libre sont à l'état bloqué l'élément de réaction (9a) est solidaire en rotation d'un rotor (37) d'un frein pouvant être sélectivement libéré pour libérer le rotor (37) et l'élément de réaction (13a) par rapport au carter (4) et faire fonctionner la transmission dans un état de point mort, et être progressivement activé pour progressivement immobiliser le rotor (37) par rapport au carter (4) pour permettre à l'élément de réaction (13a) d'être sélectivement immobilisé et respectivement libéré par rapport au carter par les moyens à fonction de roue libre (16a, 45), caractérisé en ce que le frein est un frein à disque, dont le disque constitue ledit rotor (37).

2. Transmission selon la revendication 1, caractérisée en ce que le frein comprend un moyen (83) tendant en permanence à serrer le frein et un moyen (84) pour desserrer le frein puis permettre son serrage progressif sous l'action du moyen (83) tendant en permanence à serrer le frein.

3. Transmission dans laquelle un dispositif de transmission (1a) du type différentiel (7a) comprend des éléments rotatifs à dentures interengrenées dont l'un est relié à une entrée (2a) et l'autre est relié à une sortie (2ab) du dispositif, les éléments rotatifs (8a, 9a, 13a) comprenant un élément de réaction (13a) et la transmission comprenant en outre des moyens de blocage sélectif (16, 38) interposés fonctionnellement entre l'élément de réaction (13a) et un carter (4) de la transmission, les éléments de blocage sélectif comprenant des moyens à fonction de roue libre (16a, 45) pour permettre à l'élément de réaction (13a) de tourner dans le même sens que l'entrée (2a) et la sortie (2ab) lorsqu'un dispositif d'accouplement sélectif (18) relie au moins indirectement les éléments rotatifs du mécanisme différentiel (7) pour produire un fonctionnement en prise directe, dispositif dans lequel, au moins lorsque les moyens à fonction de roue libre sont à l'état bloqué l'élément de réaction (9a) est solidaire en rotation d'un rotor (37) d'un frein pouvant être sélectivement libéré pour libérer le rotor (37) et l'élément de réaction (13a) par rapport au carter (4) et faire fonctionner la transmission dans un état de point mort, et être progressivement activé pour progressivement immobiliser le rotor (37) par rapport au carter (4) pour permettre à l'élément de réaction (13a) d'être sélectivement immobilisé et respectivement libéré par rapport au carter par les moyens à fonction de roue libre (16a, 45), caractérisée en ce que le frein est une pompe hydraulique (38) associée à des moyens (40) de fermeture du refoulement (42) de cette pompe.

4. Transmission selon la revendication 3, caractérisée en ce que la pompe hydraulique est du type à engrenage.

5. Transmission selon la revendication 4, caractérisée en ce que le rotor (37) du frein est réalisé sous la forme d'une roue de pompe à engrenage, engrenant avec plusieurs pignons de pompage (39) répartis en position fixe autour de la roue de pompage.

6. Transmission selon la revendication 5, caractérisée en ce que les pignons de pompage sont positionnés et guidés en rotation par des appuis étanches dans des alvéoles (51) solidaires du carter (4).

7. Transmission selon l'une des revendications 3 à 6, caractérisée en ce que la vanne de fermeture (40) est pilotée de manière automatique par des moyens antagonistes comprenant un moyen tachymétrique (57, 89, 96 ; 58, 92) sollicitant la vanne (40) dans le sens de la fermeture.

8. Transmission selon la revendication 7, caractérisée en ce que le moyen tachymétrique comprend une pompe tachymétrique (58) entraînée par la sortie (2c) de la transmission.

9. Transmission selon la revendication 7, caractérisée en ce que le moyen tachymétrique comprend une pompe tachymétrique (57) entraînée par l'entrée (2a) du dispositif de transmission (1a).

10. Transmission selon la revendication 9, caractérisée en ce que la pompe tachymétrique (57) est reliée à un clapet de décharge (59) maintenant la pression de refoulement constante à partir d'une certaine valeur prédéterminée.

11. Transmission selon l'une des revendications 7 à 10, caractérisée en ce que les moyens antagonistes comprennent des moyens (93) pour appliquer à la vanne (40) la pression de sortie de la pompe servant de frein (38).

12. Transmission selon l'une des revendications 3 à 11, caractérisée en ce que les moyens à fonction de roue libre comprennent un clapet anti-retour (45) qui by-passe la vanne (40) pour permettre à l'huile de circuler librement dans la pompe dans le sens contraire à celui correspondant à la rotation que le rotor (37) tend à effectuer sous le couple de réaction subi en service par l'organe de réaction (13a).

13. Transmission selon l'une des revendications 1 à 11, caractérisée en ce que l'élément de réaction (13a) est relié au rotor du frein (38) par l'intermédiaire des moyens à fonction de roue libre (16a).

14. Transmission selon l'une des revendications 1 à 13, caractérisée en ce que le rotor (37) est réalisé massif pour former volant d'inertie.

15. Transmission selon l'une des revendications 1 à 14, caractérisée en ce que le dispositif de transmission comprend un train épicycloïdal (7a) dans lequel une roue planétaire (9a) est reliée à l'entrée (2a), une couronne (8a) est reliée à la sortie (2ab), et un porte-satellites (13a) constitue l'élément de réaction.

16. Transmission selon l'une des revendications 1 à 14, caractérisée en ce que le dispositif de transmission (1a) comprend un train épicycloïdal (7a) dans lequel une roue planétaire (9a) est reliée à l'entrée (2a), une couronne (8a) est reliée à la sortie (2ab), et un porte-satellites (13a) constitue l'élément de réaction, et en ce que le porte-satellites supporte en rotation des cascades de satellites (11a) comprenant chacune un nombre pair de satellites qui engrènent ensemble, chaque cascade comprenant un satellite (11a) engrenant avec la roue planétaire (9a) et un satellite (11a) engrenant avec la couronne (8a).

17. Transmission selon la revendication 15 ou 16, caractérisée en ce qu'elle comporte au moins un deuxième dispositif de transmission comprenant une couronne d'entrée (8) reliée à ladite sortie (2ab), une roue planétaire de réaction (9) reliée au carter (4) par l'intermédiaire d'une roue libre (16) et un porte-satellites (13) de sortie.

18. Transmission selon l'une des revendications 15 à 17, caractérisée en ce que la sortie (2ab) du dispositif de transmission (1a) entoure l'entrée (2a) du dispositif de transmission (1a), et en ce que le porte-satellites (13a) est relié au rotor (37) du côté du train épicycloïdal (7a) qui est opposé à l'entrée (2a) et à la sortie (2ab).

19. Transmission selon la revendication 18, caractérisée en ce que l'entrée (2a) est supportée par un palier (3a) dans un moyeu (111) reliant le porte-satellites (13a) au rotor (37), et le moyeu (111) est supporté par un palier (3ab) relativement au carter (4).

20. Transmission selon l'une des revendications 1 à 19, caractérisé en ce que le frein (38) est disposé au-delà d'une extrémité du carter (4), le dispositif de transmission (1a) étant adjacent à cette extrémité.

21. Transmission selon l'une des revendications 15 à 20, caractérisée en ce que l'entrée (2a) comprend un arbre autour duquel est monté au moins un deuxième dispositif de transmission (1b, 1c) ayant une entrée (2ab) raccordée à la sortie du dispositif de transmission équipé du frein (38), de façon qu'une sortie (2c) de la transmission soit située du côté où l'entrée (2a) est raccordable à un moteur d'entraînement (5).

22. Transmission selon l'une des revendications 1 à 21, comprenant plusieurs modules successifs (1a, 1b, 1c) montés en série entre un arbre d'entrée (2a) et un arbre de sortie (2b), chaque module comprenant un mécanisme différentiel (7a, 7) avec un élément de réaction (13a, 9) pouvant être bloqué par rapport au carter (4), caractérisée en ce que le frein (38) équipe le module (1a) qui est fonctionnellement le plus proche de l'arbre d'entrée (2a) de la transmission, et en ce que les éléments de réaction (9) des autres modules (1b, 1c) peuvent être bloqués directement par rapport au carter (4) de la transmission.

## Patentansprüche

1. Getriebe, bei welchem eine Kraftübertragungsvorrichtung (1a) des Typs Differential (7a) drehende Elemente mit in gegenseitigem Eingnff stehenden Verzahnungen umfaßt, von denen das eine mit einem Antrieb (2a) und das andere mit einem Abtrieb (2ab) der Vorrichtung verbunden ist, wobei die drehenden Elemente (8a, 9a, 13a) ein Reaktionselement (13a) und das Getriebe außerdem Mittel (16, 38) zur selektiven Blockierung, die funktionell zwischen das Reaktionselement (13a) und ein Gehäuse (4) des Getriebes geschaltet sind, umfassen, die Elemente zur selektiven Blockierung Mittel (16a, 45) mit Freilauffunktion umfassen, um dem Reaktionselement (13a) zu erlauben, sich im gleichen Sinn zu drehen, wie der Antrieb (2a) und der Abtrieb (2ab), wenn eine Vorrichtung (18) zur selektiven Kupplung zumindest indirekt die drehenden Elemente des Differentialgetriebes (7) verbindet, um eine Funktion direkten Eingriffs zu bewirken, bei welcher Vorrichtung zumindest dann, wenn sich die Mittel mit Freiiauffunktion im blockierten Zustand befinden, das Reaktionselement (9a) drehfest mit einem Rotor (37) einer Bremse verbunden ist, die selektiv gelöst werden kann, um den Rotor (37) und das Reaktionselement (13a) in bezug auf das Gehäuse (4) freizugeben und das Getriebe in einem Neutralgangzustand arbeiten zu lassen, und progressiv aktiviert werden kann, um den Rotor (37) in bezug auf das Gehäuse (4) zu blockieren, um zu erlauben, daß das Reaktionselement (13a) von den Mitteln (16a, 45) mit Freilauffunktion in bezug auf das Gehäuse selektiv blockiert bzw. freigegeben wird, dadurch gekennzeichnet, daß die Bremse eine Scheibenbremse ist, deren Scheibe den genannten Rotor (37) bildet.

2. Getriebe nach Anspruch 1, dadurch gekennzeichnet, daß die Bremse ein Mittel (83) umfaßt, das ständig trachtet, die Bremse anzuziehen, und ein Mittel (84) zum Lösen der Bremse und danach Ermöglichen des progressiven Anziehens derselben unter der Wirkung des Mittels (83), das ständig trachtet, die Bremse anzuziehen.

3. Getriebe, bei welchem eine Kraftübertragungsvorrichtung (1a) des Typs Differential (7a) drehende Elemente mit in gegenseitigem Eingriff stehenden Verzahnungen umfaßt, von denen das eine mit einem Antrieb (2a) und das andere mit einem Abtrieb (2ab) der Vorrichtung verbunden ist, wobei die drehenden Elemente (8a, 9a, 13a) ein Reaktionselement (13a) und das Getriebe außerdem Mittel (16, 38) zur selektiven Blockierung, die funktionell zwischen das Reaktionselement (13a) und ein Gehäuse (4) des Getriebes geschaltet sind, umfassen. die Elemente zur selektiven Blockierung Mittel (16a, 45) mit Freilauffunktion umfassen, um aem Reaktionselement (13a) zu erlauben, sich im gleichen Sinn zu drehen, wie der Antrieb (2a) und der Abtrieb (2ab), wenn eine Vorrichtung (18) zur selektiven Kupplung zumindest indirekt die drehenden Elemente des Differentialgetriebes (7) verbindet, um eine Funktion direkten Eingriffs zu bewirken, bei welcher Vorrichtung zumindest dann, wenn sich die Mittel mit Freilauffunktion im blockierten Zustand befinden, das Reaktionselement (9a) drehfest mit einem Rotor (37) einer Bremse verbunden ist, die selektiv gelöst werden kann, um den Rotor (37) und das Reaktionselement (13a) in bezug auf das Gehäuse (4) freizugeben und das Getriebe in einem Neutral- gangzustand arbeiten zu lassen, und progressiv aktiviert werden kann, um den Rotor (37) in bezug auf das Gehäuse (4) zu blockieren, um zu erlauben, daß das Reaktionselement (13a) von den Mitteln (16a, 45) mit Freilauffunktion in bezug auf das Gehäuse selektiv blockiert bzw. freigegeben wird, dadurch gekennzeichnet, daß die Bremse eine Hydraulikpumpe (38) ist, der Mittel (40) zum Schließen der Druckseite (42) dieser Pumpe zugeordnet sind.

4. Getriebe nach Anspruch 3, dadurch gekennzeichnet, daß die Hydraulikpumpe eine Zahnradpumpe ist.

5. Getriebe nach Anspruch 4, dadurch gekennzeichnet, daß der Rotor (37) der Bremse in Form eines Zahnradpumpenrades ausgeführt ist, das mit mehreren Pumpritzeln (39), die in stationärer Lage um das Pumprad herum verteilt sind, in Eingriff steht.

6. Getriebe nach Anspruch 5, dadurch gekennzeichnet, daß die Pumpritzel durch dichte Abstützungen in Zellen (51) des Gehäuses (4) positioniert und drehbar geführt sind.

7. Getriebe nach einem der Ansprüche 3 bis 6, dadurch gekennzeichnet daß das Schließventil (40) automatisch von gegenwirkenden Mitteln vorgesteuert wird, die ein Tachometermittel (57, 89, 96; 58, 92) umfassen, das das Ventil (40) im Schließsinn belastet.

8. Getriebe nach Anspruch 7, dadurch gekennzeichnet, daß das Tachometermittel eine vom Abtrieb (2c) des Getriebes angetriebene Tachometerpumpe (58) umfaßt.

9. Getriebe nach Anspruch 7, dadurch gekennzeichnet, daß das Tachometermittel eine vom Antrieb (2a) der Kraftübertragungsvorrichtung (1a) angetriebene Tachometerpumpe (57) umfaßt.

10. Getriebe nach Anspruch 9, dadurch gekennzeichnet, daß die Tachometerpumpe (57) mit einer Ablaßklappe (59) in Verbindung steht, die den Förderdruck ausgehend von einem vorbestimmten Wert konstant hält.

11. Getriebe nach einem der Ansprüche 7 bis 10, dadurch gekennzeichnet daß die gegenwirkenden Mittel Mittel (93) zum Anlegen des Ausgangsdruckes der als Bremse (38) dienenden Pumpe an das Ventil (40) umfassen.

12. Getriebe nach einem der Ansprüche 3 bis 11, dadurch gekennzeichnet, daß die Mittel mit Freilauffunktion ein Rückschlagventil (45) umfassen, das das Ventil (40) umgeht um dem Öl zu erlauben, frei durch die Pumpe im Gegensinn zu jenem der Drehung frei zu zirkulieren, die der Rotor (37) unter dem Reaktionsmoment, dem das Reaktionsorgan (13a) im Betrieb unterliegt, auszuführen trachtet.

13. Getriebe nacn einem der Ansprüche 1 bis 11, dadurch gekennzeicnnet, daß das Reaktionselement (13a) mit dem Rotor der Bremse (38) mit Hilfe von den Mitteln (16a) mit Freilauffunktion verbunden ist.

14. Getriebe nach einem der Ansprüche 1 bis 13, dadurch gekennzeichnet, daß der Rotor (37) massiv ausgeführt ist, um ein Schwungrad zu bilden.

15. Getriebe nach einem der Ansprüche 1 bis 14, dadurch gekennzeichnet, caß die Kraftübertragungsvorrichtung einen Umlaufgetriebezug (7a) umfaßt, bei dem ein Sonnenrad (9a) mit dem Antrieb (2a) verbunden ist, ein Hohlrad (8a) mit dem Abtrieb (2ab) verbunden ist und ein Planetenradträger (13a) das Reaktionselement bildet.

16. Getriebe nach einem der Ansprüche 1 bis 14, dadurch gekennzeichnet, daß die Kraftübertragungsvorrichtung (1a) einen Umlaufgetriebezug (7a) umfaßt, bei dem ein Sonnenrad (9a) mit dem Antrieb (2a) verbunden ist, ein Hohlrad (8a) mit dem Abtrieb (2ab) verbunden ist und ein Planetenradträger (13a) das Reaktionselement bildet, und daß der Planetenradträger Planetenradkaskaden (11a) drehbar abstützt, von denen jede eine gerade Zahl von gegenseitig in Eingriff stehenden Planetenrädern umfaßt, wobei jede Kaskade ein mit dem Sonnenrad (9a) in Eingriff stehendes Planetenrad (11a) und ein mit dem Hohlrad (8a) in Eingriff stehendes Planetenrad (11a) aufweist.

17. Getriebe nach Anspruch 15 oder 16, dadurch gekennzeichnet, daß es wenigstens eine zweite Kraftübertragungsvorrichtung mit einem mit dem genannten Abtrieb (2ab) in Verbindung stehenden Antriebshohlrad (8), ein Reaktions- Sonnenrad (9), das mit dem Gehäuse (4) mittels eines Freilaufrades (16) verbunden ist, und einen Abtriebs-Planetenradträger (13) umfaßt.

18. Getriebe nach einem der Ansprüche 15 bis 17, dadurch gekennzeichnet, daß der Abtrieb (2ab) der Kraftübertragungsvorrichtung (1a) den Antrieb (2a) der Kraftübertragungsvorrichtung (1a) umgibt, und daß der Planetenradträger (13a) mit dem Rotor (37) auf der dem Antrieb (2a) und dem Abtrieb (2ab) entgegengesetzten Seite des Umlaufgetriebezuges (7a) in Verbindung steht.

19. Getriebe nach Anspruch 18, dadurch gekennzeichnet, daß der Antrieb (2a) von einem Lager (3a) in einer den Planetenradträger (13a) mit dem Rotor (37) verbindenden Nabe (111) abgestützt ist, und die Nabe (111) von einem Lager (3ab) in bezug auf das Gehäuse (4) abgestützt ist.

20. Getriebe nach einem der Ansprüche 1 bis 19, dadurch gekennzeichnet, daß die Bremse (38) jenseits eines Endes des Gehäuses (4) angeordnet ist, wobei die Kraftübertragungsvorrichtung (1) diesem Ende benachbart ist.

21. Getriebe nach einem der Ansprüche 15 bis 20, dadurch gekennzeichnet, daß der Antrieb (2a) eine Welle umfaßt, um die herum wenigstens eine zweite Kraftübertragungsvorrichtung (1b, 1c), die einen an den Abtrieb der mit der Bremse (38) ausgestatteten Kraftübertragungsvorrichtung angeschlossenen Antrieb (2ab) besitzt, so montiert ist, daß ein Abtrieb (2c) des Getriebes auf der Seite angeordnet ist, wo der Antrieb (2a) mit einem Antriebsmotor (5) verbindbar ist.

22. Getriebe nach einem der Ansprüche 1 bis 21, mit mehreren aufeinanderfolgenden Modulen (1a, 1b, 1c), die hintereinander zwischen einer Antriebswelle (2a) und einer Abtriebswelle (2b) montiert sind, wobei jeder Modul ein Differentialgetriebe (7a, 7) mit einem Reaktionselement (13a, 9) umfaßt, das in bezug auf das Gehäuse (4) blockiert werden kann, dadurch gekennzeichnet, daß der Modul (1a), der der Antriebswelle (2a) des Getriebes funktionell am nächsten ist, mit der Bremse (38) ausgestattet ist, und daß die Reaktionselemente (9) der anderen Modulen (1b, 1c) in bezug auf das Gehäuse (4) des Getriebes direkt blockiert werden können.

## Claims

1. A transmission system in which a transmission device (1a) of a differential type (7a) comprises rotating elements with intermeshing teeth, one of which elements is connected to an input shaft (2a) and the other to an output shaft (2ab) of the device, said rotating elements (8a, 9a, 13a) comprising a reaction element (13a) and the transmission system moreover comprises selective locking means (16, 38) mounted operatively between the reaction element (13a) and a housing (4) of the transmission system, the selective locking means comprising means (16a, 45) having a free wheel function for enabling said reaction element (13a) to turn in the same direction as said input shaft (2a) and said output shaft (2ab) when a selective coupling device (18) connects at least indirectly the rotating elements of said differential mechanism (7) in order to ensure direct drive operation, in which device at least when the means having a free wheel function are in the locked condition said reaction element (9a) is integral in rotation with a rotor (37) of a brake being able to be selectively released in order to release said rotor (37) and said reaction element (13a) in relation to said housing (4) and to make the transmission system operate in a neutral position and to be gradually activated gradually to immobilise said rotor (37) in relation to said housing (4) so as to enable said reaction element (13a) to be selectively immobilised and released, respectively, in relation to the housing by said means having the function of a free wheel (16a, 45), characterised in that said brake (38) is a disk brake, the disk of which constitutes said rotor (37).

2. A transmission system according to claim 1 characterised in that the brake comprises a means (83) tending permanently to apply the brake and a means (84) for releasing the brake then enabling it to be applied gradually under the action of said means (83) tending permanently to apply the brake.

3. A transmission system in which a transmission device (la) of a differential type (7a) comprises rotating elements with intermeshing teeth, one of which elements is connected to an input shaft (2a) and the other to an output shaft (2ab) of the device, said rotating elements (8a, 9a, 13a) comprising a reaction element (13a) and the transmission system moreover comprises selective locking means (16, 38) mounted operatively between the reaction element (13a) and a housing (4) of the transmission system, the selective locking means comprising means (16a, 45) having a free wheel function for enabling said reaction element (13a) to turn in the same direction as said input shaft (2a) and said output shaft (2ab) when a selective coupling device (18) connects at least indirectly the rotating elements of said differential mechanism (7) in order to ensure direct drive operation, in which device at least when the means having a free wheel function are in the locked condition said reaction element (9a) is integral in rotation with a rotor (37) of a brake being able to be selectively released in order to release said rotor (37) and said reaction element (13a) in relation to said housing (4) and to make the transmission system operate in a neutral position and to be gradually activated gradually to immobilise said rotor (37) in relation to said housing (4) so as to enable said reaction element (13a) to be selectively immobilised and released, respectively, in relation to the housing, by said means having the function of a free wheel (16a, 45), characterised in that the brake is an hydraulic pump (38) connected to a means (40) for closing a delivery pipe (42) of the said pump.

4. A transmission system according to claim 3, characterised in that the hydraulic pump is a gear pump.

5. A transmission system according to claim 4, characterised in that said rotor (37) of the brake is in the form of a gear pump wheel meshing with several pumping pinions (39) arranged in a fixed position around the pump wheel.

6. A transmission system according to claim 5, characterised in that the pumping pinions are located and guided in rotation by being sealingly supported in cavities (51) of the housing (4).

7. A transmission system according to any one of claims 3 to 6, characterised in that said closing valve (40) is controlled automatically by opposing means comprising a tachometric means (57, 89, 96 ; 58, 92) biasing said valve (40) towards the closed position.

8. A transmission system according to claim 7, characterised in that the tachometric means comprises a tachometric pump (58) driven by the output shaft (2c) of the transmission system.

9. A transmission system according to claim 7, characterised in that the tachometric means comprises a tachometric pump (57) driven by the input shaft (2a) of the transmission device (1a).

10. A transmission system according to claim 9, characterised in that said tachometric pump (57) is connected to a relief valve (59) preventing the delivery pressure from overcoming a certain predetermined value.

11. A transmission system according to any one of claims 7 to 10, characterised in that the opposing means comprise means (93) in order to apply to said valve (40) the output pressure of the pump serving as said brake (38).

12. A transmission system according to any one of claims 3 to 11, characterised in that the means having a free-wheel function comprise a non-return valve (45) which by-passes said valve (40) for enabling the oil to flow freely in the pump in the opposite direction to that corresponding to the rotation that said rotor (37) tends to follow under the reaction torque undergone during operation by said reaction member (13a).

13. A transmission system according to one of claims 1-11, characterised in that the reaction element (13a) is connected to the rotor of the brake (38) by way of said means having the function of a free-wheel (16a).

14. A transmission system according to anyone of claims 1-13, characterised in that said rotor (37) is made solid in order to form an inertia flywheel.

15. A transmission system according to anyone of claims 1-14, characterised in that the transmission device comprises an epicyclic train (7a) in which a sun gear (9a) is connected to said input shaft (2a), a crown wheel (8a) is connected to said output shaft (2ab), and a planet gear carrier (13a) constitutes the reaction element.

16. A transmission system according to anyone of claims 1-14, characterised in that said transmission device (1a) comprises an epicyclic train (7a) in which a sun gear (9a) is connected to said input shaft (2a), a crown wheel (8a) is connected to said output shaft (2ab), and a planet gear carrier (13a) constitutes the reaction element, and in that the planet gear carrier supports in rotation cascades of planet gears (11a) each comprising an even number of planet gears which mesh together, each cascade comprising a planet gear (11a) meshing with said sun wheel (9a) and a planet gear (11a) meshing with said crown wheel (8a).

17. A transmission system according to claim 15 or 16, characterised by comprising at least one second transmission device comprising an input crown wheel (8) connected to the said output shaft (2ab), a reaction sun gear (9) connected to said housing (4) by means of a free wheel (16) and an output planet gear carrier (11).

18. A transmission system according to any one of claims 15-17, characterised in that the output shaft (2ab) of said transmission device (1a) surrounds the input shaft (2a) of said transmission device (1a), and in that said planet gear carrier (13a) is connected to said rotor (37) on the side of said epicyclic train (7a) which faces away from said input shaft (2a) and output shaft (2ab).

19. A transmission system according to claim 18, characterised in that said input shaft (2a) is supported by a bearing (3a) in a hub (111) connecting said planet gear carrier (13a) to said rotor (37), and said hub (111) is supported by a bearing (3ab) in relation to said housing (4).

20. A transmission system according to anyone of claims 1-19, characterised in that said brake (38) is located beyond one end of said housing (4), said transmission device (1a) being adjacent to said one end.

21. A transmission system according to anyone of claims 15-20, characterised in that said input shaft (2a) comprises a shaft around which is mounted at least one second transmission device (1b, 1c) having an input shaft (2ab) connected to the output shaft of the transmission device equipped with said brake (38), so that an output shaft (2c) of the transmission is located on the side where said input shaft (2a) can be connected to a driving engine (5).

22. A transmission system according to any one of claims 1-21, comprising several successive modules (1a, 1b, 1c) mounted in series between an input shaft (2a) and an output shaft (2b), each module comprising a differential mechanism (7a, 7) with a reaction element (13a, 9) capable of being locked in relation to housing (4), characterised in that said brake (38) is fitted to module (la) which is operationally the closest to the input shaft (2a) of the transmission and in that the reaction elements (9) of the other modules (1b, 1c) can be locked directly in relation to said housing (4) of the transmission system.
